# DEMANDE DE BREVET EUROPEEN

(11) **EP 0 961 341 A1**
(43) Date de publication de la demande: **01.12.1999**
(21) Numéro de dépôt: 98460018.9
(22) Date de dépôt: 29.05.1998
(51) Int. Cl.: H01Q 1/12, F16B 2/06

(54) **Dispositif pour la fixation d'antennes**

(71) Demandeur: TRT Lucent Technologies (SA), 92359 Le Plessis Robinson (FR)
(72) Inventeur: Archer, Bernard, 91310 Linas (FR)
(74) Mandataire: Ballot, Paul

(57) **Abrégé**

Il s'agit d'un dispositif de support intermédiaire (F), destiné à l'ancrage d'une antenne sur un arêtier de pylône.

Le dispositif comprend : une base (10a) prévue pour être appliquée sur l'extérieur d'une aile (a1) d'un arêtier en cornière (A), présentant un premier moyen (13) d'accrochage sur le bord de l'aile (a1) ; au moins un crochet à tige (15) pour l'accrochage sur le bord de la seconde aile d'arêtier (a2), chaque tige passant dans un trou (14) de la base (10a) et recevant en extrémité un écrou de serrage (16) ; et un élément d'interposition (17) prévu pour venir sous l'écrou (16), consistant en un segment à profil arrondi dans sa partie en contact contre la base (10a), pour permettre une inclinaison variable de la tige de crochet (15), afin d'obtenir un ancrage pareillement efficace sur des arêtiers de profils différents.

## Description

La présente invention concerne la fixation de matériels en "aérien", s'agissant plus particulièrement de la fixation d'antennes.

En règle générale, les pylônes ou autres supports de base destinés à recevoir des antennes comportent, intégrés ou rapportés dans leur structure, des tronçons de profilés sur lesquels s'effectue l'ancrage des antennes ou de leur mât au moyen d'un élément de support intermédiaire, Ces tronçons de profilés sont communément appelés "arêtier" dans la profession, et c'est donc le terme qui sera désigné dans la suite pour les désigner.

Dans la pratique, il existe des arêtiers de sections diverses qui varient tant dans leur forme que dans leurs dimensions. Ce sont pour l'essentiel des tronçons de barre ronde ou de cornière, mais celle-ci est indifféremment à angle droit, ou fermée, ou ouverte. Et à chacune des formes de profil, correspond une forme particulière de l'élément de support intermédiaire précité.

Dans son travail quotidien, le poseur d'antennes se trouve donc confronté à ce problème d'avoir toujours à disposition une gamme complète desdits éléments de support intermédiaires pour être en mesure d'utiliser sur site celui qui va correspondre au type d'arêtier rencontré.

C'est de la recherche d'une solution à ce problème que résulte l'invention dont l'idée de base est la conception d'un dispositif de support intermédiaire unique utilisable sur une pluralité d'arêtiers de profils différents tout en assurant un ancrage efficace et fiable.

Selon l'invention, un tel dispositif de support intermédiaire, destiné à l'ancrage sur un arêtier en cornière d'un matériel tel qu'antenne, comprenant une partie pour la fixation dudit matériel, solidaire d'une partie d'ancrage sur ledit arêtier, est caractérisé en ce que ladite partie d'ancrage comporte :
une base d'ancrage prévue pour être appliquée sur l'extérieur d'une première aile dudit arêtier, laquelle base présente en extrémité un premier moyen d'accrochage sur le bord libre de ladite première aile,
au moins un crochet à tige pour assurer l'accrochage sur le bord libre de la seconde aile d'arêtier, chaque tige passant dans un trou de ladite base, à distance dudit premier moyen d'accrochage, et ayant sa partie d'extrémité filetée pour recevoir un écrou de serrage, et
un élément d'interposition prévu pour venir entre ledit écrou de serrage et ladite base, pour assurer une portée adéquate dudit écrou sur ladite base, lequel élément d'interposition se présente sous la forme d'un segment à profil arrondi dans sa partie destinée à venir en contact contre ladite base, pour permettre une inclinaison variable de ladite tige de crochet transversalement par rapport à l'arêtier, afin d'obtenir un ancrage efficace sur l'une quelconque d'une pluralité d'arêtiers en cornière variant par leur angle rectiligne et les dimensions de leur section.

Selon des caractéristiques additionnelles de l'invention pouvant être prévues seules ou en combinaison :
- ledit premier moyen d'accrochage peut consister en un retour d'extrémité de ladite base, formant avec elle un angle rectiligne aigu ;
- les trous de passage de tige de crochet dans ladite base peuvent être des lumières allongées, orientées dans la direction correspondant au sens transversal de l'arêtier ;
- pour chaque tige de crochet, il peut être prévu une suite de lumières de passage dans ladite base, alignées dans la direction correspondant au sens transversal de l'arêtier ;
- il peut être prévu deux crochets à tige, destinés à être écartés l'un de l'autre dans la direction correspondant à la longueur de l'arêtier ; ledit élément d'interposition étant alors avantageusement une barrette commune aux deux crochets à tige ;
- il peut être prévu des élément de bridage en U destinés à traverser ladite base par leurs extrémités, pour permettre l'ancrage sur des arêtiers de section ronde ; auquel cas les trous de passage dans ladite base prévus pour les extrémités desdites brides sont avantageusement combinés avec les trous de passage de tige de crochet ;
- ladite base comporte avantageusement des retours à fonction de raidisseur sur deux côtés opposés dont la direction correspond au sens transversal de l'arêtier.

Ces caractéristiques et avantages de l'invention, ainsi que d'autres, apparaîtront plus clairement dans la description qui suit et les dessins joints, dans lesquels :
la Fig. 1 est une vue schématique en perspective d'un dispositif de fixation selon l'invention ;
les Figs. 2 et 3 sont des vues en perspective du dispositif de la Fig. 1 monté sur des arêtiers de type cornière, respectivement à angle rectiligne de 90° et de 60° ; et
la Fig. 4 est une vue en perspective du dispositif de la Fig. 1 monté sur un arêtier de section circulaire.

Dans l'ensemble des dessins, les mêmes références ont été utilisées pour désigner partout les mêmes éléments.

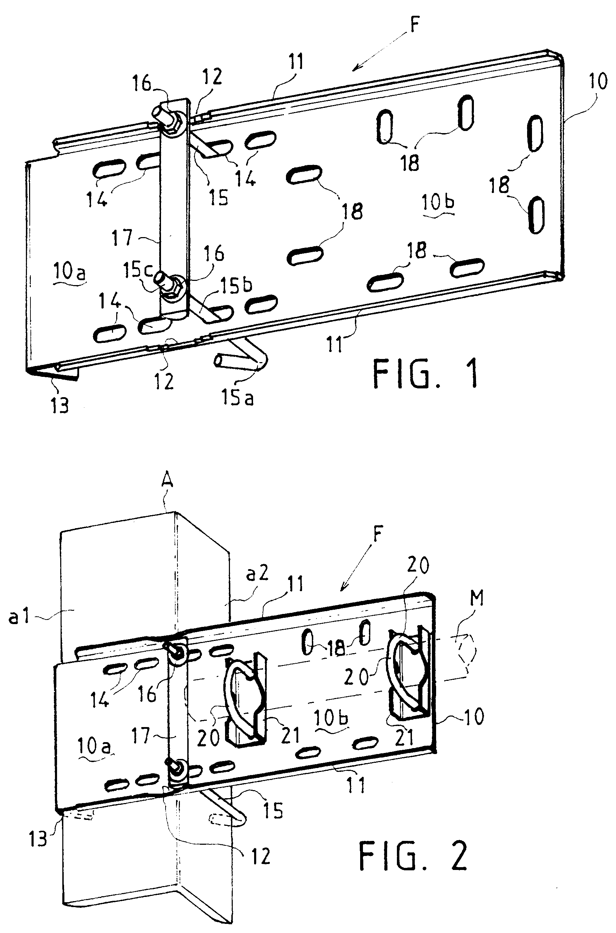

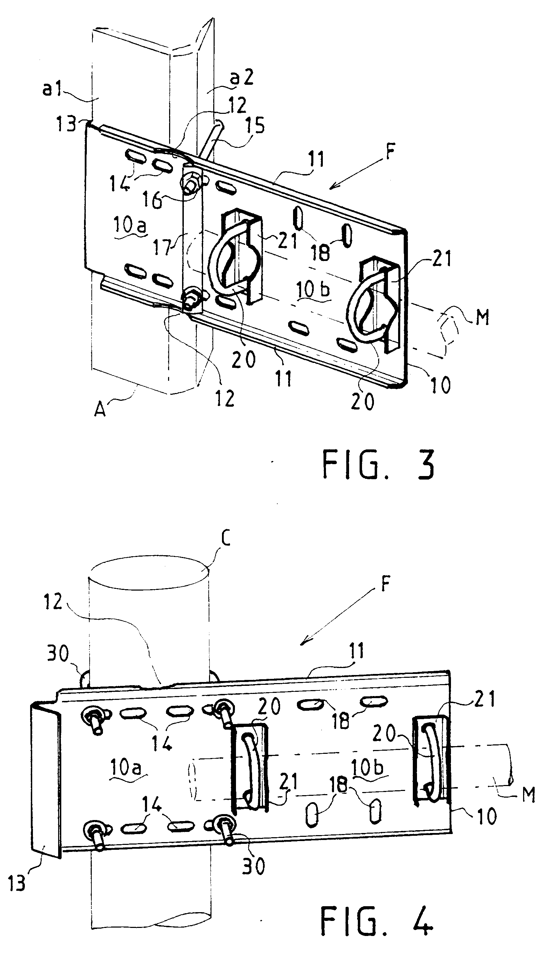

Considérant d'abord la Fig. 1, elle représente les composants d'un dispositif de fixation F selon l'invention pouvant être ancré avec une même efficacité sur des cornières de sections diverses, variant tant par les dimensions de leurs ailes que par leur angle rectiligne. On verra dans la suite, à propos de la Fig. 4, que ce même dispositif, avec deux brides supplémentaires, peut être ancré sur un arêtier de section ronde.

Le dispositif F comprend un élément principal 10 consistant en une plaque métallique de forme rectangulaire, qui présente longitudinalement une première région 10a ou base d'ancrage, à gauche sur le dessin, prolongée par une seconde zone 10b, à droite sur le dessin, servant à la fixation d'une antenne, généralement par l'intermédiaire d'un mât. Dans la forme de réalisation représentée, il n'y a pas de solution de continuité entre les régions 10a, 10b, mais ce pourrait être le cas, de même que les deux régions pourraient être deux éléments distincts solidarisés entre eux.

La plaque 10 comporte sur ses deux grands côtés des retours 11 à fonction de raidisseurs, qui présentent en vis-à-vis, dans la partie médiane de la base d'ancrage 10a, des échancrures 12 découpées de préférence en gradins. Les retours 11 seront orientés transversalement par rapport à un arêtier, mais dans la suite, les termes "transversalement" et "longitudinalement", si non autrement précisé, seront à considérer relativement à la plaque 10.

La base d'ancrage 10a comporte le long de son côté d'extrémité libre un repli ou retour 13, formant avec elle un angle rectiligne aigu, et qui est orienté à l'opposé des retours 11. Le retour 13 a vocation d'accrochage sur le bord libre d'une première aile d'arêtier en cornière.

La base d'ancrage 10a comporte en outre, à proximité des retours 11 et parallèles à eux, deux rangées de lumières 14 allongées longitudinalement et réparties de chaque côté des échancrures 12. Dans les deux rangées, les lumières 14 sont en vis-à-vis transversalement deux à deux.

La région 10b comporte elle aussi des lumières oblongues 18 semblables aux lumières 14 et destinées à la fixation d'un mât d'antenne M comme l'illustrent les Figs. 2 à 4 : les lumières 18 sont réparties en deux mêmes groupes de quatre lumières qui sont décalés l'un de l'autre de 90° pour permettre d'orienter le mât d'antenne soit horizontalement ou bien verticalement. Chaque groupe comporte deux paires distantes en vis-à-vis de lumières 18 alignées transversalement pour l'un et longitudinalement pour l'autre, l'orientation des lumières 18 dans un même groupe étant décalée de 90° d'une paire à l'autre pour permettre un réglage fin de l'orientation du mât M, lequel se fixe comme le montrent les Figs. 2 à 4 au moyen de brides en U 20 et de berceaux d'interposition 21.

Outre l'élément 10, le dispositif F comprend des moyens pour coopérer avec celui-ci en s'accrochant sur le bord libre de la deuxième aile de cornière d'un arêtier et en assurant le blocage de l'ensemble.

Ces moyens comprennent deux tiges 15 formant crochet par une partie d'extrémité 15a recourbée en épingle et dont l'autre partie d'extrémité 15c, au-delà d'une partie intermédiaire rectiligne 15b, est filetée pour recevoir un écrou 16 après passage dans une lumière 14 de la base d'ancrage 10a ; ainsi qu'un élément d'interposition 17 destiné à assurer une portée correcte entre les écrous 16 et la paroi de la base d'ancrage 10a. A cet effet, l'élément d'interposition 17 est une barrette présentant un profil arrondi dans sa partie venant en vis-à-vis de la base d'ancrage 10a. Les deux crochets tiges 15 sont passés dans des lumières 14 en vis-à-vis, et tel que représenté, l'élément d'interposition 17 consiste en une barrette demi-ronde commune aux deux crochets tiges 15 et qui couvre donc pratiquement toute la largeur de l'élément 10.

La Fig. 2 représente le dispositif F ancré sur un arêtier A en cornière droite (angle rectiligne de 90°).

Au montage, la base 10a est appliquée sur l'aile a1, avec son retour d'extrémité 13 passé sur le bord libre de celle-ci. Les extrémités 15c des crochets tiges 15 ancrés sur le bord libre de l'aile a2 sont passées dans les deux lumières en vis-à-vis 14 les plus adéquates, à savoir celles pour lesquelles l'angle entre la partie de tige intermédiaire 15b et la base d'ancrage 10a sera le plus voisin, intérieurement de 90°. Lors du serrage au moyen des écrous 16, la barrette 17 assurera une portée également efficace sur la paroi de l'élément 10, que le crochet tige 15 soit parfaitement orthogonal à l'élément 10, ou qu'il soit en position biaise. Il conviendra de noter en outre que le plus souvent, lesdits bords libres des ailes de cornière sont découpés intérieurement en chanfrein, ce qui va dans le sens d'une meilleure prise de la part des crochets 13 et 15.

La Fig. 3 montre le même dispositif F ancré sur un arêtier A en cornière fermée (angle rectiligne aigu de 60°, environ). L'ancrage est en tout point réalisé de la même façon que dans l'exemple précédent. Les tiges des crochets 15 sont ici inclinées sur la base 10a d'un angle au plus égal à 60°, sans que l'efficacité de la portée de la barrette d'interposition 17, ni par conséquent la solidité de la fixation, soit diminuée. Il va de soi que la même qualité d'ancrage serait obtenue sur un arêtier en cornière ouverte (angle rectiligne au-delà de 90°).

A la Fig. 4, le même dispositif F est représenté ancré sur un arêtier C de section circulaire. Il comporte à cet effet deux mêmes brides 30 en forme de U conformées au diamètre de l'arêtier. Au montage, l'élément 10 est d'abord appliqué sur l'arêtier de telle manière que celui-ci soit engagé dans les échancrures 12, puis les brides 30 sont mises en place, les extrémités de chacune passant dans des lumières 14 d'une même rangée longitudinale et recevant des écrous de serrage. A noter que la découpe en gradins des échancrures 12 confère une excellente stabilité à la fixation.

## Revendications

1. Dispositif de support intermédiaire, destiné à l'ancrage sur un arêtier en cornière (A) d'un matériel tel qu'antenne, comprenant une partie pour la fixation dudit matériel, solidaire d'une partie d'ancrage sur ledit arêtier, caractérisé en ce que ladite partie d'ancrage comporte :
une base d'ancrage (10a) prévue pour être appliquée sur l'extérieur d'une première aile (a1) dudit arêtier (A), laquelle base (10a) présente en extrémité un premier moyen d'accrochage sur le bord libre de ladite première aile (a1),
au moins un crochet à tige (15) pour assurer l'accrochage sur le bord libre de la seconde aile d'arêtier (a2), chaque tige passant dans un trou (14) de ladite base (10a) à distance dudit premier moyen d'accrochage, et ayant sa partie d'extrémité filetée pour recevoir un écrou de serrage (16), et
un élément d'interposition (17) prévu pour venir entre ledit écrou de serrage (16) et ladite base (10a), pour assurer une portée adéquate dudit écrou (16) sur ladite base (10a), lequel élément d'interposition (17) se présente sous la forme d'un segment à profil arrondi dans sa partie destinée à venir en contact contre ladite base (10a), pour permettre une inclinaison variable de ladite tige de crochet (15) transversalement par rapport à l'arêtier (A), afin d'obtenir un ancrage efficace sur l'une quelconque d'une pluralité d'arêtiers en cornière variant par leur angle rectiligne et les dimensions de leur section.

2. Dispositif selon la revendication 1, caractérisé en ce que ledit premier moyen d'accrochage consiste en un retour d'extrémité (13) de ladite base (10a), formant avec elle un angle rectiligne aigu.

3. Dispositif selon la revendication 1 ou 2, caractérisé en ce que lesdits trous (14) pour le passage des tiges de crochet (15) dans ladite base (10a) sont des lumières allongées et orientées dans la direction correspondant au sens transversal de l'arêtier (A).

4. Dispositif selon la revendication 3, caractérisé en ce que pour chaque tige de crochet (15), il est prévu une suite de lumières de passage (14) dans la base (10a), alignées dans la direction correspondant au sens transversal de l'arêtier (A).

5. Dispositif selon la revendication 4, caractérisé en ce qu'il comprend deux crochets à tige (15), destinés à être écartés l'un de l'autre dans la direction correspondant à la longueur de l'arêtier (A).

6. Dispositif selon la revendication 5, caractérisé en ce que ledit élément d'interposition (17) est une barrette commune aux deux crochets à tige (15).

7. Dispositif selon l'une des revendications 1 à 6, caractérisé en ce qu'il comprend en outre des élément de bridage en U (30) destinés à traverser la base (10a) par leurs extrémités, pour permettre l'ancrage sur des arêtiers (C) de section ronde.

8. Dispositif selon la revendication 7, caractérisé en ce que les trous de passage dans ladite base prévus pour les extrémités desdites brides (30) sont combinés avec les trous (14) de passage des tiges de crochet (15).

9. Dispositif selon l'une des revendications 1 à 8, caractérisé en ce que ladite base (10a) comporte des retours (11) à fonction de raidisseur sur deux côtés opposés dont la direction correspond sensiblement au sens transversal de l'arêtier (A).

10. Dispositif selon la revendication 9, caractérisé en ce que dans la partie médiane de la base (10a), les retours (11) comportent des échancrures (12) en vis-à-vis destinées à recevoir un arêtier (C) de section ronde.

11. Dispositif selon la revendication 10, caractérisé en ce que lesdites échancrures (12) sont découpées en gradins.

12. Dispositif selon l'une des revendications 1 à 11, caractérisé en ce que ladite base (10a) est une région d'une plaque (10) prolongée par une autre région (10b) de celle-ci constituant ladite partie pour la fixation dudit matériel tel qu'antenne.
